# EUROPEAN PATENT APPLICATION

(11) **EP 2 717 587 A2**
(43) Date of publication of application: **09.04.2014**
(21) Application number: 13182054.0
(22) Date of filing: 28.08.2013
(51) Int. Cl.: H04N 13/04

(54) **Display apparatus, glasses apparatus, controlling method thereof**

(30) Priority: 31.08.2012 KR 20120096418
(71) Applicant: Samsung Electronics Co., Ltd, Gyeonggi-do 443-742 (KR)
(72) Inventor: Seo, Je-hwan, Daegu (KR); Yang, Geun-sam, Gyeonggi-do (KR); Lee, Seung-bok, Gyeonggi-do (KR)
(74) Representative: Bray, Richard Anthony

(57) **Abstract**

A display apparatus, a glasses apparatus and a control method are provided. The display apparatus includes a display which displays a plurality of contents, an audio signal processor which generates a single audio signal by signal-processing a plurality of audio data which correspond to each of the plurality of contents, and a communicator which transmits the signal-processed single audio signal to a glasses apparatus.

## Description

### CROSS-REFERENCE TO RELATED APPLICATIONS

This application claims priority from Korean Patent Application No. 10-2012-0096418, filed in the Korean Intellectual Property Office on August 31, 2012, the disclosure of which is incorporated herein by reference, in its entirety.

### BACKGROUND

### 1. Field of the Invention

Aspects of the exemplary embodiments relate to a display apparatus, a glasses apparatus, and a control method thereof, and more particularly, to a display apparatus which is capable of processing audio data which corresponds to displayed contents, a glasses apparatus, and a control method thereof.

### 2. Description of the Related Art

With the development of electronic technology, various types of electronic products have been developed. In particular, various display apparatuses such as a television, a mobile phone, a PC, a notebook PC, and a PDA have been widely used in households.

As such display apparatuses have been widely used, there has been an increase in user needs for various functions. Accordingly, manufacturers have attempted to meet such user needs by providing products with new functions, such as providing 3D contents.

A recent display apparatus which enables a plurality of users to watch different contents from each other by simultaneously providing a plurality of contents is being developed. In particular, a method has been introduced for providing a specific content to a user wearing a glasses apparatus by synchronizing the glasses apparatus with one of a plurality of contents displayed on a display apparatus.

Accordingly, a method of providing a user with a plurality of audio data which corresponds appropriately to a plurality of contents is required.

### SUMMARY

According to the present invention there is provided an apparatus and method as set forth in the appended claims. Other features of the invention will be apparent from the dependent claims, and the description which follows. Exemplary embodiments provide a display apparatus which is capable of processing and providing a plurality of audio data, a glasses apparatus, and a control method thereof.

According to an aspect of an exemplary embodiment, there is provided display apparatus including a display displays a plurality of contents, an audio signal processor which generates a single audio signal by signal-processing a plurality of audio data which correspond to each of the plurality of contents, and a communication configured to transmit which transmits the signal-processed single audio signal to a glasses apparatus.

The plurality of audio data may be a plurality of different mono audio signals corresponding to each of a plurality of contents which are alternately displayed on the display, and the audio signal processor may be configured to generate a single stereo audio signal by signal-processing the plurality of different mono audio signals.

The display apparatus may further include a sync signal processor configured to generate a sync signal which corresponds to the plurality of contents and transmits the sync signal to the glasses apparatus.

The sync signal processor may include a Bluetooth communication module.

The audio signal processor may include an RF communication module.

A glasses apparatus which is interlocked with a display apparatus displaying a plurality of contents according to an exemplary embodiment may include a first communicator which receives a single audio signal including a plurality of audio data which corresponds to each of the plurality of contents from the display apparatus, a signal processor configured to decrypt the plurality of audio data from the audio signal, a user interface configured to receive a user command to select one of the plurality of audio data, an audio output unit, and a controller configured to control the audio output to selectively output one of the plurality of audio data according to the user command.

The plurality of audio data may be configured as a plurality of different mono audio signals which correspond to each of a plurality of contents which are alternately displayed on the display apparatus, and the first communicator may be configured to receive a single stereo signal including the plurality of different mono audio signals from the display apparatus.

The glasses apparatus may further include a second communicator configured to receive a sync signal which corresponds to each of the plurality of contents from the display apparatus, a shutter glasses apparatus configured to include a first shutter glasses and a second shutter glasses, and a shutter glasses driver configured to open the first shutter glasses and the second shutter glasses, and the controller, in response to a sync signal being received, may be configured to control the shutter glasses driver in order to control timing of opening a first shutter glasses and a second shutter glasses in accordance with a time at which each of the plurality of contents is displayed, based on the sync signal.

The first communicator may be configured to include an RF communication module, and the second communicator may be configured to include a Bluetooth® communication module.

The glasses apparatus may be configured as an active-type glasses apparatus.

The glasses apparatus may be configured as a passive-type glasses apparatus.

According to an aspect of another exemplary embodiment, there is provided a method of controlling a display apparatus, the method including displaying a plurality of contents, generating a single audio signal by signal-processing a plurality of audio data which correspond to each of the plurality of contents, and transmitting the signal-processed single audio signal to a glasses apparatus.

The plurality of audio data may be configured as a plurality of different mono audio signals which correspond to each of a plurality of contents which are alternately displayed on the display unit, and the generating an audio signal may include generating a single stereo audio signal by signal-processing the plurality of different mono audio signals.

The method may further include generating a sync signal which corresponds to the plurality of contents and transmitting the sync signal to the glasses apparatus.

The transmitting of the sync signal to the glasses apparatus may include transmitting the sync signal through a Bluetooth® communication.

The transmitting the signal-processed single audio signal to a glasses apparatus may include transmitting the sync signal through RF communication.

According to an aspect of another exemplary embodiment, there is provided, a method of controlling a display apparatus interlocked with a display apparatus which displays a plurality of contents, the method including receiving an audio signal, including a plurality of audio data, which corresponds to each of the plurality of contents from the display apparatus, decrypting the plurality of audio data from the audio signal, receiving a user command to select one of the plurality of the decrypted audio data, and selectively outputting one of the plurality of audio data, according to the user command.

The plurality of audio data may be a plurality of different mono audio signals which correspond to each of a plurality of contents which are alternately displayed on the display apparatus, and the receiving of an audio signal may include receiving a single stereo signal which includes the plurality of different mono audio signals from the display apparatus.

The method may further include receiving a sync signal which corresponds to each of the plurality of contents from the display apparatus, and in response to the sync signal being received, controlling an opening timing of a first shutter glasses unit and a second shutter glasses in accordance with a time at which each of the plurality of contents are displayed based on the sync signal.

The receiving of an audio signal may include receiving the audio signal trough RF communication, and the receiving of sync signal may include receiving the sync signal through a Bluetooth communication.

According to an aspect of another exemplary embodiment, there is provided a display apparatus including: an audio signal processor configured to generate a single audio signal by signal-processing a plurality of audio data which correspond to each of a plurality of contents.

The display apparatus may further include a display configured to display the plurality of contents.

The display apparatus may further include a communicator configured to transmit the signal-processed single audio signal to a glasses apparatus.

The plurality of audio data may be a plurality of different mono audio signals which correspond to each of a plurality of contents which are alternately displayed on the display,

wherein the audio signal processor generates a single stereo audio signal by signal-processing the plurality of different mono audio signals.

The display apparatus may further include: a sync signal processor configured to generate a sync signal which corresponds to the plurality of contents and transmits the sync signal to the glasses apparatus.

The sync signal processor may include a communication module and the communicator may include an RF communication module.

According to the above-mentioned various exemplary embodiments, a plurality of audio signals may be transmitted and thus, user convenience may be enhanced.

### BRIEF DESCRIPTION OF THE DRAWINGS

For a better understanding of the invention, and to show how embodiments of the same may be carried into effect, reference will now be made, by way of example, to the accompanying diagrammatic drawings in which::

FIGS. 1A and 1B are schematic views provided to explain a configuration of a content providing system, according to an exemplary embodiment;

FIGS. 2A and 2B are views provided to briefly explain operations of a content providing system, according to an exemplary embodiment;

FIGS. 3A and 3B are block diagrams provided to explain a configuration of a display apparatus, according to an exemplary embodiment;

FIGS. 4A and 4B are block diagram illustrating a configuration of an audio signal processor, according to an exemplary embodiment;

FIG. 5 is a block diagram provided to explain a configuration of a glasses apparatus, according to an exemplary embodiment;

FIG. 6 is a view which illustrates an example of a packet format which is transmitted in a pairing processing, according to the Bluetooth® standard;

FIG. 7 is a flowchart provided to explain a method of controlling a display apparatus, according to an exemplary embodiment; and

FIG. 8 is a flowchart provided to explain a method of controlling a glasses apparatus, according to an exemplary embodiment.

### DETAILED DESCRIPTION

Certain exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

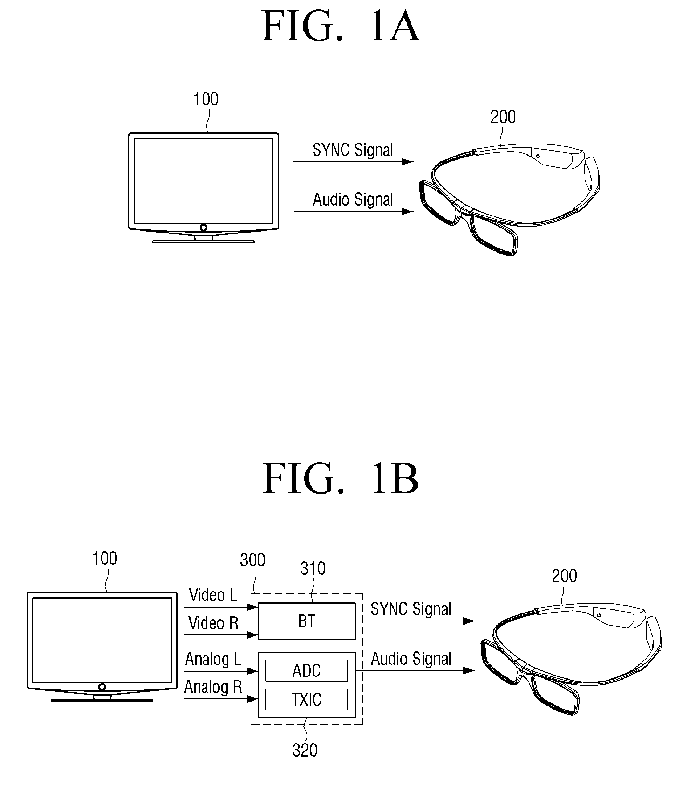

FIGS. 1A and 1B are schematic views provided to explain configuration of a content providing system according to an exemplary embodiment.

As illustrated in FIG. 1A, a content providing system according to an exemplary embodiment comprises a display apparatus 100 and a glasses apparatus 200.

The display apparatus 100 may display at least one content. At least one content may be a two-dimensional (2D) content or a three-dimensional (3D) content.

In particular, the display apparatus 100 may display a plurality of contents such as a plurality of 2D contents or 3D contents.

In addition, the display apparatus 100 processes a video sync signal (hereinafter, referred to as a sync signal) and an audio signal and transmits the processed signals to the glasses apparatus 200. Specifically, the display apparatus 100 may be configured to include a sync signal processor (not shown) which processes a sync signal and an audio signal processor (not shown) which processes an audio signal.

The sync signal processor (not shown) may be configured to include a Bluetooth® communication module which receives/transmits a sync signal.

The audio signal processor (not shown) may process a plurality of audio signals which correspond to a plurality of audio signals into a single audio signal and may transmit the processed audio signal to the glasses apparatus 200. The plurality of audio signals may be a different mono audio signal which corresponds to a plurality of different contents or may be L or R signal constituting a stereo audio signal which corresponds to one content. The audio signal processor (not shown) may include ADC and TX IC, which will be explained later in detail.

The glasses apparatus 200 receives a video sync signal and an audio signal from the display apparatus 100.

The glasses apparatus 200 alternately opens left and right shutter glasses according to a received video sync signal and outputs a received audio signal based on the received video sync signal.

Specifically, the glasses apparatus 200 may selectively output one of a plurality of audio signals which are obtained by decrypting a received audio signal or may output alternately a plurality of audio signals.

In the above-exemplary embodiment, a signal processor which processes an audio signal and a sync signal is integrally formed with the display apparatus 100, but this is only an example. As illustrated in FIG. 1B, the sync signal processor 310 which processes a video sync signal and the audio signal processor 320 which processes an audio signal may be formed as signal processors separately from the display apparatus 100. In this case, the sync signal processor 310 and the audio signal processor 320 may be formed as a single signal processor 300, or the sync signal processor 310 and the audio signal processor 320 may be formed as a separate signal processor from each other.

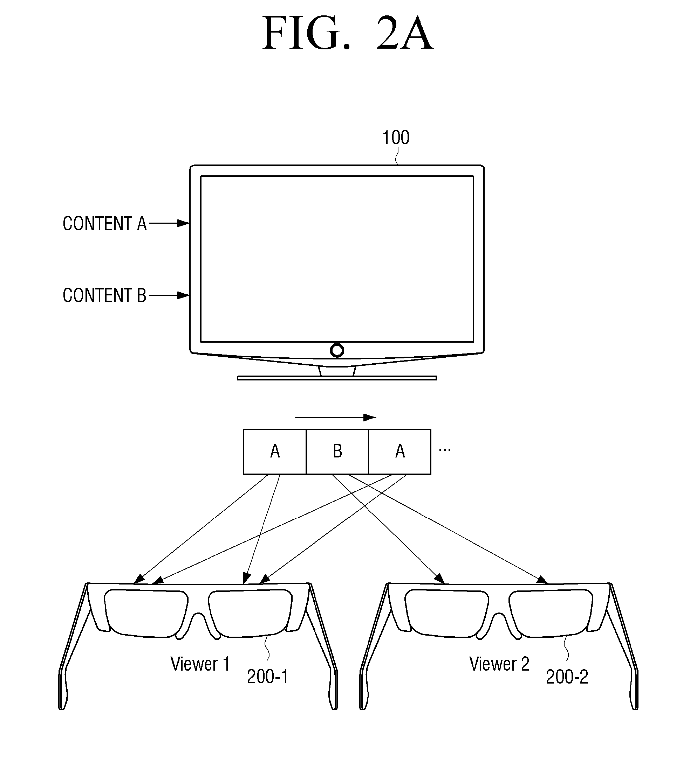

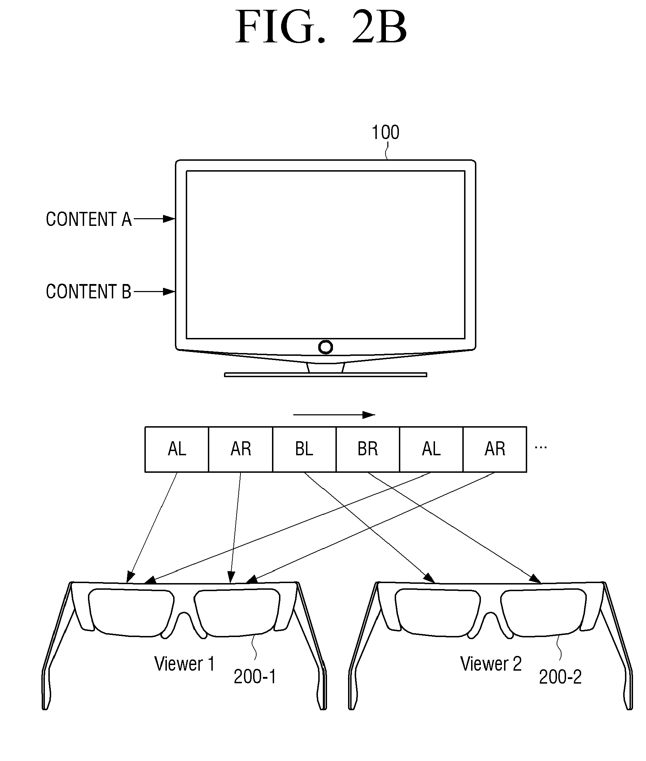

FIGS. 2A and 2B are views provided to briefly explain operations of a content providing system according to an exemplary embodiment. For convenience of explanation, the signal processor 300 of FIG. 1 is not illustrated in FIGS. 2A and 2B, and the operations of the display apparatus 100 and the glasses apparatus 200 are explained.

FIG. 2A is a view provided to explain a method for providing a plurality of 2D contents according to an exemplary embodiment.

The display apparatus 100 alternately displays a plurality of 2D contents (contents A and B) generates a sync signal which synchronizes glasses apparatuses 1, 2 (200-1, 200-2) with each content and transmits the generated sync signal to the glasses apparatuses 200-1, 200-2.

In this case, the glasses apparatus 1 (200-1) may operate to open both left shutter glasses and right shutter glasses when a content A is displayed in accordance with a sync signal, and close both left shutter glasses and right shutter glasses when another content B is displayed. Accordingly, a viewer 1 wearing the glasses apparatus 1 (200-1) may watch only the content A which is synchronized with the glasses apparatus 1 (200-1). Likewise, a viewer 2 wearing the glasses apparatus 2 (200-2) may watch only the content B.

FIG. 2B is a view provided to explain a method for providing a plurality of 3D contents according to an exemplary embodiment.

As illustrated in the drawing, in response to a plurality of 3D contents (contents A and B) being 3D contents, the display apparatus 100 may alternately display a plurality of 3D contents (contents A and B) alternately while displaying a left eye image and a right eye image of each 3D content.

For example, a left eye image and a right eye image (AL, AR) of the 3D content A may be displayed and a left eye image and a right eye image (BL, BR) of the 3D content B may be alternately displayed. In this case, the glasses apparatus 1 (200-1) may open left eye and right eye glasses at a time when a left eye image and a right eye image (AL, AR) of the 3D content A are displayed, and the glasses apparatus 2 (200-2) may open left eye and right eye glasses at a time when a left eye image and a right eye image (BL, BR) of the 3D content B are displayed.

Accordingly, the viewer 1 wearing the glasses apparatus 1 (200-1) may watch only the 3D content A, and the viewer 2 wearing the glasses apparatus 2 (200-2) may watch only the 3D content B.

However, the above description only applies to a shutter glasses method, and in response to a polarized light method being used, the polarization direction of each of a plurality of content images may be configured to be consistent with the polarization direction of the glasses apparatuses 1 and 2, in order to support a multi-view mode, which is obvious to those skilled in the related art.

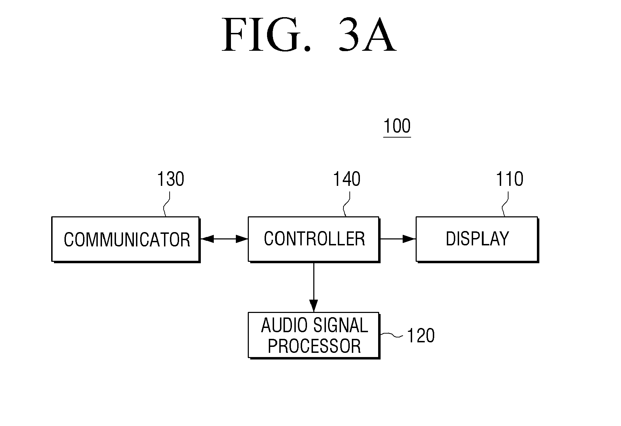

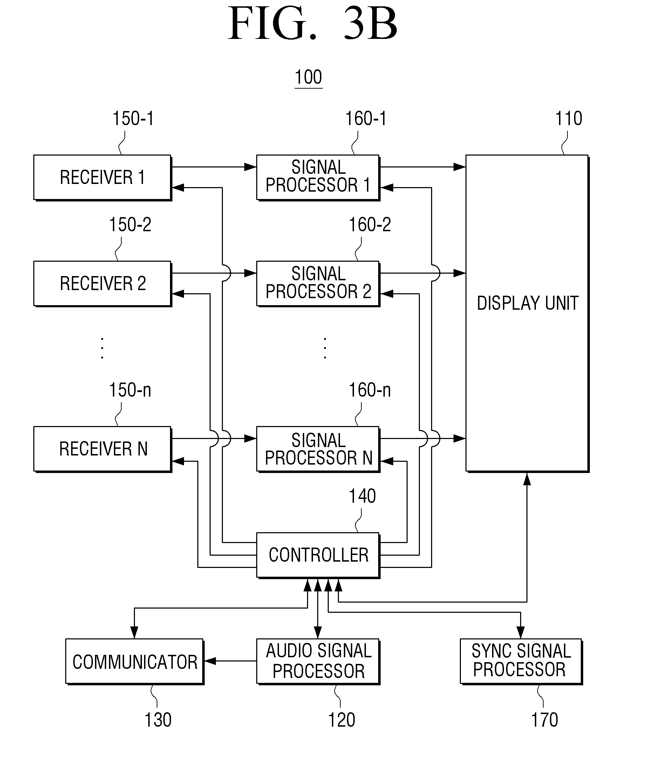

FIGS. 3A and 3B are block diagrams provided to explain a configuration of a display apparatus, according to an exemplary embodiment.

According to FIG. 3A, the display apparatus 100 comprises a display 110, an audio signal processor 120, a communicator 130, and a controller 140. Herein, the display apparatus 100 may be implemented as various apparatuses having a display unit, such as TV, mobile phone, PDA, notebook PC, monitor, tablet PC, electronic book, electronic album, kiosk, etc.

The display unit 110 alternately displays each of a plurality of contents. Specifically, the display unit 110 may alternately display image frames of each content, at least one at a time.

For example, the display unit 110 may display image frames so that at least one image frame of a first content and one image frame of a second frame, ..., an image frame of nth content may be alternately displayed.

The audio signal processor 120 may generate a single signal by signal-processing a plurality of audio data. The plurality of audio data may be different mono audio signals which correspond to a plurality of contents or L and R signals which constitute a stereo audio signal which corresponds to a single content.

Specifically, the audio signal processor 120 converts a plurality of audio signals into a single stereo signal through an Intermediate Frequency (IF).

In particular, even though a plurality of audio signals have different sampling rates, the audio signal processor 120 may generate a single stereo signal by performing signal-processing such as audio IF.

For example, a plurality of audio signals may be converted into a single stereo signal through signal-processing such as IIS. Herein, IIS (Integrated Interchip Sound) is a serial bus design for digital audio apparatus and technology, such as DSP, digital TV sound, etc. In IIS design, audio data is processed separately from a clock signal. In response to data being separated from a clock signal, a jitter prevention apparatus is not required since errors involving time which causes jitters do not occur. An IIS bus comprises a circuit for a time-division multiplexing data channel, a circuit for word selection, and a clock circuit. Since the IIS technology is well-known technology to those skilled in the related art, further description will not be provided.

The communicator 130 may transmit a signal which is generated by the audio signal processor 120 to the glasses apparatus 200 through a predetermined frequency band. Herein, the communicator 130 may be configured to include an RF communication module.

The controller 140 controls overall operations of the display apparatus 100. In particular, the controller 140 may control transmission of an audio signal, including a plurality of audio data, to the glasses apparatus 200.

In addition, the controller 140 may control a pairing operation in response to a request from the glasses apparatus 200. Hereinafter, a case where the display apparatus 100 and the glasses apparatus 200 perform a pairing operation according to a Bluetooth communication method will be explained.

Specifically, the glasses apparatus 200 searches the display apparatus 100 within an area in which Bluetooth communication is available by broadcasting an inquiry message in order to perform a pairing operation. In response to an inquiry message being received, the controller 140 controls the communicator 130 to transmit an Extended Inquiry Response (EIR) to the glasses apparatus 200. Herein, the response message may include Bluetooth device address, device name, class of device (COD), clock information, etc.

The glasses apparatus 200 which receive a response message transmits a transmission packet including Bluetooth address, device type, and etc. to the display apparatus 100. If the corresponding transmission packet is received through the communicator 130, the controller 140 may control the communicator 130 to transmit/receive a pin code to/from the glasses apparatus 200 in order to perform a pairing operation with the glasses apparatus 200. Herein, the controller 140 may perform a pairing operation by automatically registering the display apparatus 100 without the user inputting a pin code. However, the exemplary embodiment is not limited thereto, and a user may perform a pairing operation by directly inputting a pin code of the display apparatus 100.

As such, the controller 140 may perform a connection operation by transmitting a response message to an inquiry message once the inquiry message is received from the glasses apparatus 200 so that the communicator 130 may communicate with the glasses apparatus 200. In this case, if an inquiry message is received from the glasses apparatus 200, the controller 140 may control the audio data transmitter 130 to transmit communicator to the glasses apparatus 200.

FIG. 3B is a block diagram provided to explain a detailed configuration of a display apparatus according to an exemplary embodiment. According to FIG. 3(B), the display apparatus 100 comprises the display unit 110, the audio signal processor 120, the communicator 130, the controller 140, a plurality of receivers 150-1, 150-2, ..., 150-n, a plurality of signal processors 160-1, 160-2, ..., 160-n, and a sync signal processor 170. Since the components of FIG. 3(B) which have the same reference numerals as those in FIG. 2 perform the same function as those in FIG. 2, further description will not be provided.

The plurality of receivers 150-1, 150-2, ..., 150-n receive different contents from each other. Specifically, each of the plurality of receivers 150-1, 150-2, ..., 150-n receives contents from a broadcasting station which transmits broadcast program contents via a broadcast network or from a web server which transmits content files via the Internet. In addition, the receivers may receive contents from various recording medium reproduction apparatuses which are formed in the display apparatus 100 or are connected to the display apparatus 100. The recording medium reproduction apparatus refers to an apparatus which reproduces contents stored in various types of recording media, such as CD, DVD, hard disk, Blue-ray Disk™, memory card, USB memory, and so on.

If contents are received from a broadcast station, the plurality of receivers 150-1, 150-2, ..., 150-n may be configured to include components such as a tuner (not shown), a demodulator (not shown), an equalizer (not shown), and etc. Alternatively, if contents are received from sources such as a web server, the plurality of receivers 150-1, 150-2, ..., 150-n may be implemented as a network interface card (not shown). In addition, the plurality of receivers 150-1, 150-2, ..., 150-n do not necessarily receive contents from the same type of source, and the plurality of receivers 150-1, 150-2, ..., 150-n may receive contents from different types of sources.

The plurality of signal processors 160-1, 160-2, ..., 160-n may compose image frames by processing each content received from the plurality of receivers 150-1, 150-2, ..., 150-n.

The sync signal processor 170 may generate a sync signal for synchronizing each content with a corresponding glasses apparatus, in accordance with a display timing of each content and may transmit the generated sync signal to the glasses apparatus 200. Specifically, the sync signal processor 170 may generate a sync signal for synchronizing a glasses apparatus at a time when an image frame regarding each of a plurality of contents is displayed in a multi-view mode, and generates a sync signal for synchronizing a glasses apparatus at a time when a left eye image frame and a right eye image frame of 3D contents are displayed.

In addition, the sync signal processor 170 transmits the generated sync signal to the glasses apparatus 200. In this case, the sync signal processor 170 may be configured to include a Bluetooth communication module and may transmit the sync signal to the glasses apparatus 200 in accordance with a Bluetooth communication method.

In the above exemplary embodiment, the display apparatus 100 and the glasses apparatus 200 communicate according to a Bluetooth communication method to transmit a sync signal, but this is only an example. That is, communication may be performed not only through a Bluetooth method but also through a communication method such as an infrared ray communication, Zigbee, and etc. In addition, communication may be performed according to various wireless communication methods which allow the transmitting/receiving of signals, by forming a nearby communication channel.

As such, the display apparatus 100 may transmit a sync signal which corresponds to contents to the glasses apparatus of which pairing is completed in the form of a transmission packet according to a Bluetooth communication protocol. Once a transmission packet is received, the glasses apparatus 200 may open or close glasses based on time information included in the transmission packet. Accordingly, a user wearing the glasses apparatus 200 may watch only one content from among a plurality of contents.

The controller 140 may control the sync signal processor 170 to transmit one of sync signals which corresponds to each of a plurality of contents to the glasses apparatus 200 of which a connection operation is completed.

The sync signal transmitted to the glasses apparatus 200 may be set as a default. For example, suppose that an image frame of the first content and an image frame of the second content are alternately displayed. In this case, a sync signal which corresponds to the first content out of a sync signal corresponding to the first content and a sync signal which corresponds to the second content may be set to be transmitted to the glasses apparatus.

If a message for requesting transmission of another sync signal being received from the glasses apparatus 200, the controller 140 may control the sync signal processor 170 to transmit another sync signal.

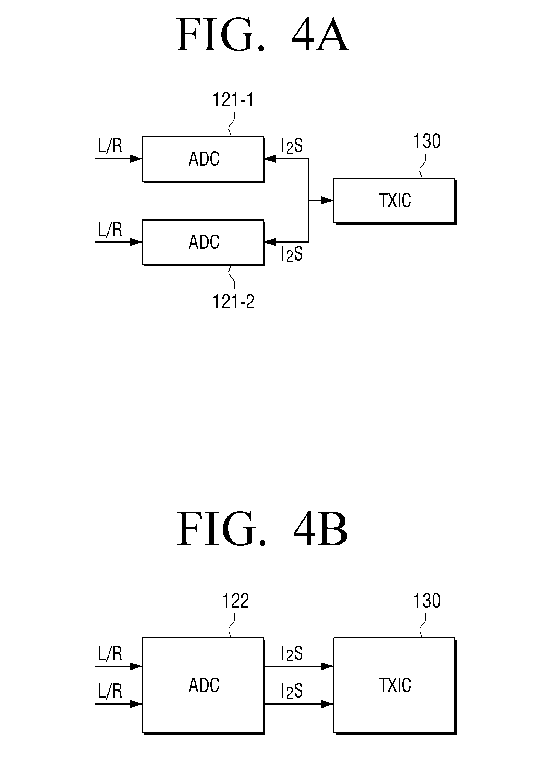

FIGS. 4A and 4B are views provided to explain an example of an audio signal processor and a communicator illustrated in FIGS. 1A and 1B.

As illustrated in FIG. 4A, an audio signal processor according to an exemplary embodiment may be implemented as a plurality of analog to digital converters (ADCs) 121-1, 121-2 which process each of a plurality of analog L/R audio signals, and the communicator 130 may be implemented as a TX IC 130 which transmits to the glasses apparatus 200 a single stereo signal which is signal-processed by a plurality of ADCs 121-1, 121-2 through the buses I₂S.

As illustrated in FIG. 4B, an audio signal processor according to another exemplary embodiment may be implemented as a single ADC 122 which processes a plurality of analog L/R audio signals, and the communicator 130 may be implemented as a TX IC 130 which transmits to the glasses apparatus 200 a single stereo signal which is signal-processed by the single ADC 122.

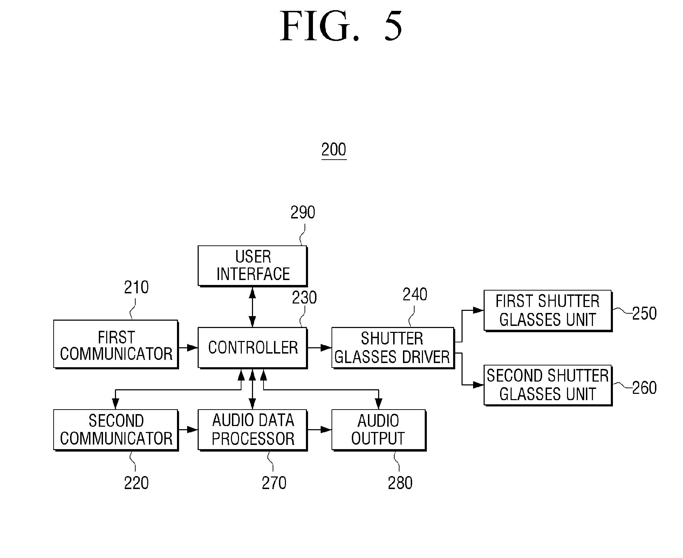

FIG. 5 is a block diagram provided to explain configuration of a glasses apparatus according to an exemplary embodiment.

According to FIG. 5, the glasses apparatus 200 comprises a first communicator 210, a second communicator 220, a controller 230, a shutter glasses driver 240, a first shutter glasses 250, a second shutter glasses 260, an audio signal processor 270, an audio output 280, and a user interface 290. In particular, the glasses apparatus 200 may be interlocked with the display apparatus (FIG. 1, 100) which alternately displays each of a plurality of contents. Herein, the glasses apparatus 200 may be implemented as an active type having shutter glasses, but is not limited thereto. That is, the glasses apparatus 200 may also be implemented as a passive type having a polarized film. Further, in some cases, the glasses apparatus 200 may adopt an active shutter method which combines the passive glasses method and the active glasses method. The active shutter method allows the output of a left eye and a right eye to be in different polarization states from each other by adding an active retarder to a display panel, instead of eliminating a liquid crystal of the active glasses. Accordingly, left eye and right eye images are time-divided and displayed and thus, each output polarization can be in different states from each other. As a result, a user may watch a high-quality 3D image using passive glasses without compromising resolution.

The first communicator 210 may transmit a connection request message to the display apparatus 100 in order to receive a sync signal which corresponds to one of a plurality of contents. That is, if a Bluetooth communication module is included, the first communicator 210 transmits an inquiry message to the display apparatus 100, and may perform a pairing operation after receiving a response message transmitted from the display apparatus 100.

If a display apparatus is connected to the first communicator 210 in accordance with a communication protocol which is defined with respect to the display apparatus 100, the communicator 210 may receive a sync signal from the display apparatus 100.

Specifically, if the display apparatus 100 is in a multi-view mode, the first communicator 210 receives a sync signal to synchronize a glasses apparatus at a time when image frames regarding one of a plurality of contents are displayed. Alternatively, if the display apparatus 100 is in a general mode, the first communicator 210 may receive a sync signal to synchronize a glasses apparatus at a time when left eye image frames and right eye image frames of 3D contents, are displayed.

The controller 230 controls overall operations of the glasses apparatus 200.

In particular, the controller 230 may control the audio output 280 to select one of a plurality of audio data obtained from the audio signal processor 270 based on a sync signal received through the first communicator 210. The output audio signal may be an audio signal related to contents which correspond to a sync signal received through the communicator 210.

Accordingly, the glasses apparatus 200 receives a plurality of different audio signals output from the display apparatus 100 and thus, may implement a dual-view audio function.

In addition, the controller 230 may control an operation of the shutter glasses driver 240 by transmitting a sync signal received from the first communicator 210 to the shutter glasses driver 240. Specifically, if a display apparatus is connected to the first communicator 210 and a sync signal being received, the controller 230 may control the shutter glasses driver 240 to control an opening timing of the first shutter glasses 250 and the second shutter glasses 260 in accordance with a display timing of one content based on the received sync signal.

The shutter glasses driver 240 opens the first shutter glasses 250 and the second shutter glasses 260. Specifically, the shutter glasses driver 240 generates a driving signal to drive the first shutter glasses 250 and the second shutter glasses 260 based on a sync signal received from the controller 230.

The first shutter glasses 250 and the second shutter glasses 260 open or close shutter glasses in accordance with a driving signal received from the shutter glasses driver 240.

Specifically, the first shutter glasses 250 and the second shutter glasses 260 simultaneously open shutter glasses when one of a plurality of contents is displayed, and open the shutter glasses all together when another content is displayed. Accordingly, a user wearing the glasses apparatus 200 may watch one content.

In the case of 3D contents, the first shutter glasses 250 and the second shutter glasses 260 may alternately open/close each of the glasses. That is, the first shutter glasses 250 may be opened at a time when a left eye image constituting one 3D content is displayed and the second shutter glasses 260 may be opened at a time when a right eye image is displayed in accordance with a driving signal.

The second communicator 220 receives an audio signal which corresponds to a content view which is synchronized with a glasses apparatus from among a plurality of audio signals output from a display apparatus. Herein, the second communication 220 may be configured to include an RF communication module.

As described above, in order to perform a multi-view function, the display apparatus 100 may detect audio data of each content and output the detected data through a different wireless frequency channels. The second communication unit 220 selects a wireless frequency channel and receives an audio signal using wireless frequency channel information which corresponds to a content view selected by the controller 240. The wireless frequency channel information may be included in a target content view information or a sync signal transmitted from the display apparatus 100 and then transmitted, or may be transmitted to the glasses apparatus 200 in a separate signal format.

The audio data processor 270 processes an audio signal received from the second communication unit 220 to detect audio data. Specifically, the audio data processor 270 may perform processing such as demodulation, noise filtering, amplification, and so on.

In particular, the audio data processor 270 may obtain a plurality of audio signals by decrypting a stereo audio signal received through the second communication 220. Herein, a plurality of audio signals may be different mono audio signals.

In addition, the audio signal processor 270 may provide an audio signal selected by the controller 230 from among a plurality of audio signals to the audio output 280. For example, the audio data processor 270 may output a selected mono audio signal to a speaker or an earphone through an audio codec in the form of L/L or R/R.

The audio output 280 may be implemented as a speaker or an earphone as described above. The audio output 280 may output audio data at a predetermined volume level. The volume may be adjusted using variable resistance formed on an output end. That is, if a volume adjustment key on the user interface 290 being adjusted, the audio output 280 may change a volume level of an audio signal by changing a variable resistance value according to the user manipulation.

The user interface 290 receives a user command to perform a connection operation with respect to the display apparatus 100. To do so, the user interface unit 290 may be implemented as a touch sensor or as a manipulation button. If a user touches a touch sensor or a manipulation button, the controller 230 may control the first communicator 210 to transmit a connection request message to a display apparatus. Specifically, if the first communicator 210 is implemented as a communication module, a connection request message may be an inquiry message to search a display apparatus within a scope where Bluetooth® communication is available.

The user interface 290 may receive various user commands. For example, the user interface 290 may receive a user command to request transmission of another sync signal when a connection operation with respect to the display apparatus 100 is completed.

In the above exemplary embodiment, the display apparatus 100 generates a sync signal which corresponds to a display timing of each content and transmits the generated sync signal to the glasses apparatus 200, but this is only an example and is not meant to be limiting. The display apparatus 100 may generate a sync signal which corresponds to a display timing of each content as a single transmission packet according to Bluetooth® communication standard and transmit the generated sync signal to a glasses apparatus.

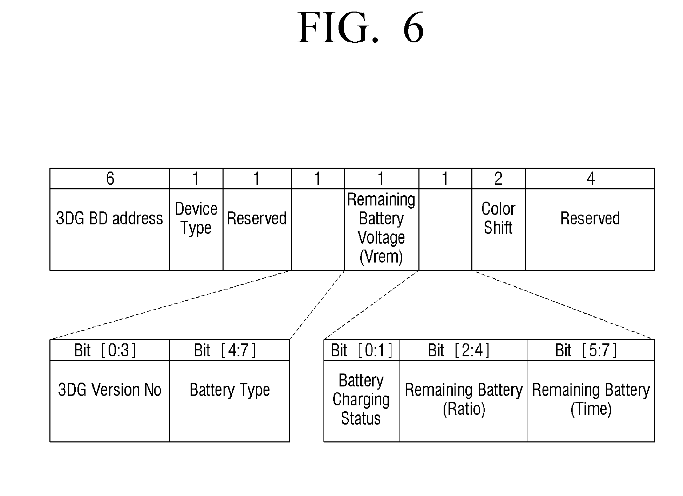

FIG. 6 is a view which illustrates an example of a packet format which is transmitted in a pairing processing according to Bluetooth standard.

Referring to FIG. 6, a packet may include information regarding 3DG BD address, device type, 3DG version No. battery type, remaining battery voltage (Vrem), battery charging status, remaining battery ratio, remaining battery time, color shift, and so on.

FIG. 6 illustrates a packet consisting of 17 bytes. If a transmission packet consists of 17 bytes, there would be reserved areas of 1 byte and 4 bytes, and various additional information may be recorded in the reserved areas.

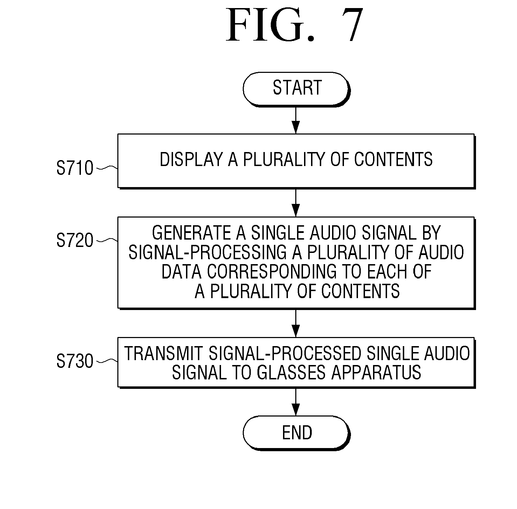

FIG. 7 is a flowchart provided to explain a method of controlling a display apparatus, according to an exemplary embodiment.

According to a method of controlling a display apparatus illustrated in FIG. 7, a plurality of contents are displayed (S71 0), and then a single audio signal is generated by performing signal-processing with respect to a plurality of audio data which corresponds to each of the plurality of displayed contents (S720).

Subsequently, the signal-processed single audio signal is transmitted to a glasses apparatus (S730). Herein, a plurality of audio data may be a plurality of different mono audio signals corresponding to each of a plurality of contents which are displayed on a display alternately. In addition,
in the step S720 of generating an audio signal, one stereo audio signal may be generated by signal-processing a plurality of different mono audio signals.

In addition, a sync signal which corresponds to a plurality of contents may be generated and transmitted to a glasses apparatus. In this case, a sync signal may be transmitted through Bluetooth communication.

Further, in step S730 where a signal-processed audio signal is transmitted to a glasses apparatus, the sync signal may be transmitted through RF communication.

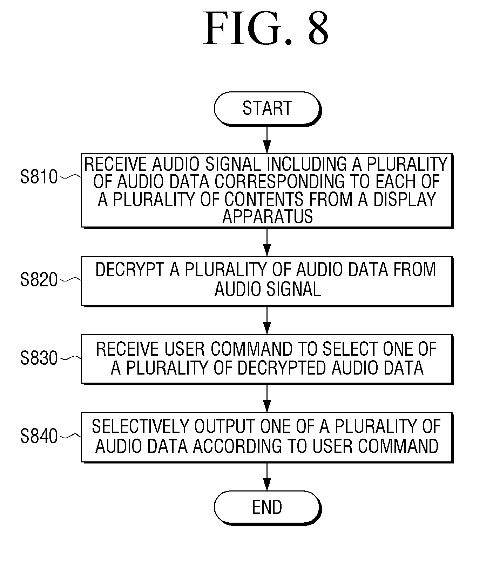

FIG. 8 is a flowchart provided to explain a method of controlling a glasses apparatus, according to an exemplary embodiment.

According to a display apparatus displaying a plurality of contents, and a method of controlling an interlocked glasses apparatus as illustrated in FIG. 8, an audio signal including a plurality of audio data which corresponds to each of a plurality of contents is received from a display apparatus (S810).

Subsequently, a plurality of audio data is decrypted from the received audio signal (S820).

If a user command to select one of a plurality of audio data is received (S830), one of a plurality of audio data is selectively output in accordance with the received user command (S840).

Herein, a plurality of audio data may be a plurality of different mono audio signals which correspond to each of a plurality of contents alternately displayed on a display apparatus.

In addition, the step of receiving an audio signal may include receiving a single stereo signal including a plurality of different mono audio signals from a display apparatus. In this case, an audio signal may be received through RF communication.

In addition, a sync signal which corresponds to each of a plurality of contents may be received from a display apparatus. In this case, a sync signal may be received through Bluetooth communication.

If a sync signal is received, a time at which the first and the second shutter glasses units are opened may be controlled in accordance with a display timing of each of the plurality of contents, based on the received sync signal.

Accordingly, a plurality of different sound sources may be transmitted using a single audio transmission module (that is, an audio processing module). Thus it is possible to implement a dual-view audio function.

A method of controlling a display apparatus and methods for controlling a glasses apparatus according to the above-mentioned various exemplary embodiments may be implemented as software and mounted on a display apparatus and a glasses apparatus.

Specifically, according to an exemplary embodiment, a non-transitory computer readable storage medium, when implemented on a computer, storing a program which performs a display of a plurality of contents, generating a single audio signal by signal-processing a plurality of audio data which corresponds to each of a plurality of contents, and transmitting the signal-processed audio signal to a glasses apparatus, may be installed.

In addition, a non-transitory computer readable storage medium storing a program which, when implemented on a computer, performs a method of receiving an audio signal including a plurality of audio data which corresponds to each of a plurality of contents from a display apparatus, decrypting a plurality of audio data from an audio signal, receiving a user command, to select one of a plurality of decrypted audio data, and selectively outputting one of the plurality of audio data according to a user command may be installed in a glasses apparatus.

The non-transient recordable storage medium refers to a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disk, USB, memory card, and ROM and provided therein.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a display configured to display a plurality of contents;
an audio signal processor configured to generate a single audio signal by signal-processing a plurality of audio data corresponding to each of the plurality of contents: and
a communicator configured to transmit the signal-processed single audio signal to a glasses apparatus.

2. The display apparatus as claimed in claim 1, wherein the plurality of audio data is a plurality of different mono audio signals corresponding to each of a plurality of contents which are alternately displayed on the display unit,
wherein the audio signal processor generates a single stereo audio signal by signal-processing the plurality of different mono audio signals.

3. The display apparatus as claimed in claim 1 or 2, comprising:
a sync signal processor configured to generate a sync signal corresponding to the plurality of contents and transmits the sync signal to the glasses apparatus.

4. The display apparatus as claimed in claim 3, wherein the sync signal processor includes a communication module.

5. The display apparatus as claimed in anyone of claim 1 to 4, wherein the communicator includes an RF communication module.

6. A glasses apparatus which is interlocked with a display apparatus displaying a plurality of contents, comprising:
a first communicator configured to receive a single audio signal including a plurality of audio data corresponding to each of the plurality of contents from the display apparatus;
a signal processor configured to decrypt the plurality of audio data from the audio signal;
a user interface configured to receive a user command to select one of the plurality of audio data;
au audio output; and
a controller configured to control the audio output to selectively output one of the plurality of audio data, according to the user command.

7. The glasses apparatus as claimed in claim 6, wherein the plurality of audio data is a plurality of different mono audio signals which corresponds to each of a plurality of contents which are alternately displayed on the display apparatus,
wherein the first communicator receives from the display apparatus a single stereo signal including the plurality of different mono audio signals.

8. The glasses apparatus as claimed in claim 6 or 7, further comprising:
a second communicator configured to receive a sync signal which corresponds to each of the plurality of contents from the display apparatus;
a shutter glasses including a first shutter glasses and a second shutter glasses; and
a shutter glasses driver configured to open the first shutter glasses and the second shutter glasses,
wherein the controller, in response to the sync signal being received, is configured to control the shutter glasses driver to control an opening timing of a first shutter glasses and a second shutter glasses in accordance with a time at which each of the plurality of contents is displayed based on the sync signal.

9. The glasses apparatus as claimed in claim 8, wherein the first communicator includes an RF communication module,
wherein the second communicator includes a communication module.

10. The glasses apparatus as claimed in anyone of claim 6 to 9, wherein the glasses apparatus is an active-type glasses apparatus.

11. The glasses apparatus as claimed in anyone of claim 6 to 10, wherein the glasses apparatus is a passive-type glasses apparatus.

12. A method of controlling a display apparatus, the method comprising:
displaying a plurality of contents;
generating a single audio signal by signal-processing a plurality of audio data corresponding to each of the plurality of contents; and
transmitting the signal-processed single audio signal to a glasses apparatus.

13. The method as claimed in claim 12, wherein the plurality of audio data is a plurality of different mono audio signals corresponding to each of a plurality of contents which are alternately displayed on the display,
wherein the generating an audio signal comprises generating a single stereo audio signal by signal-processing the plurality of different mono audio signals.

14. The method as claimed in claim 12 or 13, further comprising:
generating a sync signal corresponding to the plurality of contents and transmitting the sync signal to the glasses apparatus.

15. The method as claimed in claim 14, wherein the transmitting the sync signal to the glasses apparatus comprises transmitting the sync signal through a communicator.
